# EUROPEAN PATENT APPLICATION

(11) **EP 4 759 598 A1**
(43) Date of publication of application: **17.06.2026**
(21) Application number: 24219817.4
(22) Date of filing: 13.12.2024
(51) Int. Cl.: B60K 17/16, F16H 1/28, F16H 1/46, F16H 48/10, F16C 17/04

(54) **TRANSMISSION FOR A DRIVE APPARATUS OF A VEHICLE**

(71) Applicant: ZF Friedrichshafen AG, 88046 Friedrichshafen (DE)
(72) Inventor: Sun, Jiabin, Shanghai, 201615 (CN); Lai, Tao, Shanghai, 201615 (CN); Wang, Yanghao, Shanghai, 201615 (CN); Zhang, Yechen, Shanghai, 201615 (CN); Fan, Zhenhua, Shanghai, 201615 (CN); Fei, Ningzhong, Shanghai, 201615 (CN)
(74) Representative: WBH Wachenhausen Patentanwälte PartG mbB

(57) **Abstract**

A transmission comprises an input element, a first output element (5), a second output element (6), and a planetary gear device (10, 20). The planetary gear device (10, 20) comprises a first, a second and a third gear set element. The third gear set element of the planetary gear device (10, 20) is connected torque proofly to the second output element (6). The third gear set element is supported by a first bearing unit (41) being configured for receiving an axial force in a first direction and a second bearing unit (42) being configured for receiving an axial force in a second direction opposite to the first direction. At least one of the first bearing unit (41) and the second bearing unit (42) extends radially outward of the tooting of the third gear set element, the toothing of the third gear set element meshing with the toothing of a further gear set element.

## Description

### Technical field

The present invention refers to a transmission for a drive apparatus of a vehicle, a drive apparatus with a transmission and a vehicle with a drive apparatus.

### Prior art

Transmissions for a drive apparatus of a vehicle are known. With the growing complexity of the construction of vehicles and the components thereof and the growing number of parts comprised by a drive apparatus, a transmission having a simple construction is advantageous.

### Description of the invention

It is an object of the present invention to provide an improved transmission for a drive apparatus that comprises a small installation space and a simple construction.

The object is solved with a drive unit comprising the features of claim 1. Advantageous further developments are subject-matter of the dependent claims.

In a first aspect, a transmission comprises an input element, a first output element, a second output element, and a planetary gear device comprising multiple gear set elements. The transmission may be configured for dividing a driving power from the input element to the first output element and the second output element. The transmission may be formed as a differential transmission. The transmission may be applicable for a drive apparatus of a vehicle, e.g. a passenger car, a truck or a working machine.

The input element is connected torque proofly to a first gear set element of the planetary gear device. A second gear set element of the planetary gear device is connected torque proofly to the first output element. A third gear set element of the planetary gear device is connected torque proofly to the second output element. The third gear set element may comprise a toothing. The toothing of the third gear set element may be formed at an inner circumference of the third gear set element. The third gear set element may be formed by a ring gear. The third gear set element of the planetary gear device is supported by a first bearing unit being configured for receiving an axial force in a first direction and a second bearing unit being configured for receiving an axial force in a second direction opposite to the first direction. At least one of the first bearing unit and the second bearing unit extends radially outward of the tooting of the third gear set element, the toothing of the third gear set element meshing with the toothing of a further ger set element. Thereby, the transmission may be configured compactly in the axial direction. The third gear set element of the second planetary gear set may be positioned in the axial direction by at least one of the first bearing unit and the second bearing unit very precisely. Thereby, the transmission provides an improved NVH (noise, vibration, harshness) behavior.

The first direction and the second direction may be parallel to an axial direction. The axial direction may refer to a rotation axis of the input element. A rotation axis of the input element, the first output element and the second output element may be arranged in the axial direction. A radial direction may be transverse, e.g. perpendicular, to the axial direction. A circumferential direction may be arranged around the rotation axis of the input element.

When two elements are mechanically linked, the elements are directly or indirectly coupled to each other such that a movement of the one element causes a reaction of the other element. For example, a mechanical link may be provided by a frictional engagement or a positive locking. The mechanical link may correspond to a meshing of corresponding gears of the two elements. Between the elements, further elements like one or more spur gear stages may be present. A permanent torque-proof connection is a connection for that the two elements are rigidly coupled with each other for each conventional condition of for instance a transmission. The elements may be formed as separate elements connected torque-proofly with each other or may be formed integrally. The torque-proof connection between the two elements may be selectively generated and removed by a shift element, for example a sliding sleeve, a clutch or a brake.

At least one of the first bearing unit and the second bearing unit may be arranged at a radially outer side of the planetary gear device. At least one of the first bearing unit and the second bearing unit may be arranged in the radial direction at the same circumference as the third gear set element. At least one of the first bearing unit and the second bearing unit may overlap with the toothing of the third gear set element in the radial direction. Thereby, axial forces, e.g. generated in the toothing of the third gear set element, to be supported by at least one of the first bearing unit and the second bearing unit may be kept low.

The third gear set element of the planetary gear device may comprise a helical gearing. The third gear set element of the planetary gear device may generate an axial force, e.g. by its meshing engagement with the further gear set element, e. g. a planetary gear, in an operating condition. The axial force may be directed into an axial direction. A radial force may be directed into the radial direction.

The torque proof connection between the third gear set element of the planetary gear device and the second output element may comprise at least one of a dog toothing and a snap ring. The dog toothing may comprise a spline shaft profile and a splined shaft profile. The third gear set element of the planetary gear device may be positioned in the axial direction with respect to the second output element, e.g. by the snap ring.

In one embodiment of the transmission, the first bearing unit and the second bearing unit may extend radially outward of the tooting of the third gear set element. Both of first bearing unit and the second bearing unit may overlap with the toothing of the third gear set element in the radial direction.

In one embodiment of the transmission, the third gear set element may be connected torque proofly to the second output element by a gear set element carrier. The gear set element carrier may be formed as a ring gear carrier. The second output element may be connected torque proofly to or may be formed by the gear set element carrier.

In one embodiment of the transmission, the transmission may comprise a stationary element and the planetary gear device comprises a first planetary gear set and a second planetary gear set. The first planetary gear set and a second planetary gear set may form the planetary gear device. The stationary element may be formed by a housing, e.g. a transmission housing or a drive unit housing. Each of the planetary gear sets may comprise a first gear set element, a second gear set element, and a third gear set element. The input element may be connected torque proofly to the first gear set element of the first planetary gear set. The first gear set element of the first planetary gear set may form the first gear set element of the planetary gear device. The second gear set element of the first planetary gear set may be connected torque proofly to the first output element. The second gear set element of the first planetary gear set may form the second gear set element of the planetary gear device. The third gear set element of the first planetary gear set may be connected torque proofly to the first gear set element of the second planetary gear set. The second gear set element of the second planetary gear set may be connected torque proofly to the stationary element. The third gear set element of the second planetary gear set may be connected torque proofly to the second output element. The third gear set element of the second planetary gear set may form the third gear set element of the planetary gear device.

The first planetary gear set may comprise a first sun gear, a first carrier, a first planetary stud, a first planetary gear and a first ring gear. The first planetary gear set may comprise four first planetary studs and four first planetary gears. The first sun gear may be in meshing engagement with the first planetary gear. The first planetary gear may be in meshing engagement with the first ring gear. The first planetary gear may be rotatably supported by the first planetary stud. The first planetary stud may be attached to the first carrier. The first output element may be connected to or may be formed by the first carrier. The first output element may be formed as an output shaft.

The second planetary gear set may comprise a second sun gear, a second carrier, a second planetary stud, a second planetary gear and a second ring gear. The second planetary gear set may comprise four second planetary studs and four second planetary gears. The second sun gear may be in meshing engagement with the second planetary gear. The second planetary gear may be in meshing engagement with the second ring gear. The second planetary gear may be rotatably supported by the second planetary stud. The second planetary stud may be attached to the second carrier. The second ring gear may be connected torque proofly, e.g. by a dog toothing, to the ring gear carrier. The second output element may be formed as an output shaft.

The respective first gear set element may be formed by the respective sun gear. The first and the second planetary gear set may be formed as a minus planetary gear set or as a plus planetary gear set. When the first or the second planetary gear set is formed as a minus planetary gear set, the respective second gear set element may be formed by the carrier. The respective third gear set element may be formed by the ring gear. When the first or the second planetary gear set is formed as a plus planetary gear set, the respective second gear set element may be formed by the ring gear. Then, the respective planetary gear set may comprise double planetary gears being in meshing engagement with each other. The respective third gear set element may be formed by the carrier.

The input element, the first output element and the second output element may be arranged coaxially with respect to each other. The first output element may be arranged on a first side of the transmission. The second output element may be arranged on a second side of the transmission opposing to the first side of the transmission. The first output element and the second output element may be arranged on and extent to opposing sides of the transmission. The first output element may be arranged within the input element in the radial direction. The first output element may extend through the input element in the axial direction.

At least one of the first bearing unit and the second bearing unit may be supported by at least one of the stationary element or the second gear set element of the second planetary gear set. The first bearing unit may be supported by the second gear set element of the second planetary gear set, e.g. in the axial direction. The torque proof connection between the second gear set element of the second planetary gear set and the stationary element may comprise a dog toothing. The dog toothing of the torque proof connection between the second gear set element of the second planetary gear set and the stationary element may comprise at least one of a spline shaft profile and a splined shaft profile. The dog toothing may be arranged in the radial direction at an outer side of the second planetary gear set. The dog toothing may be arranged in the radial direction outside of at least one of the second gear set element and the third gear set element of the second planetary gear set. This is applicable e.g. for the case that the first planetary gear set and the second planetary gear set are formed as a minus planetary gear set, respectively. The torque proof connection between the second gear set element of the second planetary gear set and the stationary element may comprise a snap ring. The snap ring may be configured for positioning the second gear set element of the second planetary gear set with respect to the stationary element in the axial direction.

In one embodiment, at least the bearing unit that extends radially outward of the toothing of the third gear set element of the planetary gear device may comprise an axial roller bearing. Each of the first bearing unit and the second bearing unit may comprise an axial roller bearing. The respective axial roller bearing may be formed by a needle bearing, a cylindrical roller bearing or a grooved ball bearing. The axial roller bearing of the first bearing unit and the second bearing unit may be configured identically.

In one embodiment of the transmission, one of the first bearing unit and the second bearing unit may comprise a protrusion for positioning the respective bearing unit in a radial direction with reference to the third gear set element of the planetary gear device. The protrusion, e.g. a first protrusion, may comprise an annular form. The protrusion may extend in the axial direction. The protrusion may be configured for being attached to at least one of the second ring gear and a carrier for the second ring gear, e.g. at an outer circumference thereof. The third gear set element of the second planetary gear set may comprise a cylindrical outer surface for supporting the protrusion. The protrusion may be formed by or connected to a washer, e.g. a housing locating washer or a shaft locating washer. The washer may comprise a second protrusion for supporting rolling elements, e.g. balls, needles or cylinders, in a radial direction. The second protrusion may comprise an annular form. The second protrusion may be formed by or connected to a washer, e.g. a housing locating washer or a shaft locating washer. The first protrusion may be parallel or coaxial to the second protrusion. The first protrusion may extend from the washer to a side opposing to a side to which the second protrusion extends. The washer may comprise a Z-shaped profile in the circumferential direction.

In one embodiment of the transmission, the second output element may be supported by a third bearing unit configured for receiving a radial force. By the torque proof connection between the third gear set element of the planetary gear device and the second output element, the third gear set element of the planetary gear device may be supported in the radial direction by the third bearing unit. The third bearing unit may comprise a radial bearing. The radial bearing may be formed by a needle bearing. By the torque proof connection between the third gear set element of the planetary gear device and the second output element, the second output element may be positioned in the axial direction by the first bearing unit and the second bearing unit. Thereby, additional support in the axial direction, e.g. by an axial bearing, of the second output element may be unnecessary. By the precise positioning of the third gear set element of the planetary gear device, the third bearing unit may be configured compact in the axial direction. Thereby, an installation space for the second output element can be reduced, e.g. by 50%.

In one embodiment of the transmission, the third bearing unit may be arranged in the radial direction within the first bearing unit and the second bearing unit. The third bearing unit may be arranged in the radial direction within the first gear set element of the second planetary gear set. The third bearing unit and at least one of the first, second and third gear set element of the second planetary gear set may be arranged in the axial direction in the same plane. The stationary element may comprise a bearing seat for the third bearing unit at an inner circumference. The ring gear carrier may comprise a bearing seat for the third bearing unit at an outer circumference. The third bearing unit may be arranged in the radial direction between the ring gear carrier and the stationary element.

In one embodiment of the transmission, a connection portion of the second output element for the torque proof connection to a traction element shaft for driving a traction element is arranged in the axial direction in the same plane as a toothing of the planetary gear device. The connection portion may comprise at least one of a dog toothing and a snap ring. The dog toothing may comprise at least one of a spline shaft profile and a splined shaft profile. The connection portion may be arranged in the axial direction in the same plane as the toothing of the third gear set element. The connection portion may be arranged in the axial direction in the same plane as the toothing of the third gear set element. The connection portion may be arranged in the axial direction in the same plane as the toothing of at least one of the second sun gear, the second planetary gear and the second ring gear.

In one embodiment of the transmission, the first planetary gear set and the second planetary gear set may be displaced in the axial direction with respect to each other. The third gear set element of the first planetary gear set and the first gear set element of the second planetary gear set may overlap in the radial direction. The first gear set element of the second planetary gear set may be arranged within the third gear set element of the first planetary gear set in the radial direction. Thereby, the transmission may be configured compact in the radial direction.

In one embodiment of the transmission, the first sun gear may form the first gear set element of the first planetary gear set. The first carrier may form the second gear set element of the first planetary gear set. The first ring gear may form the third gear set element of the first planetary gear set. The second sun gear may form the first gear set element of the second planetary gear set. The second carrier may form the second gear set element of the second planetary gear set. The second ring gear may form the third gear set element of the second planetary gear set.

In a second aspect, a drive apparatus comprises a motor and a transmission according to one of the preceding embodiments. Further features, effects and advantages for the second aspect can be inferred from the features, effects and advantages of the first aspect. Features, effects and advantages of the second aspect also provide features, effects and advantages for the first aspect. The motor is configured for providing a driving power to the input element of the transmission. The transmission is configured for dividing the driving power from the input element to the first output element and the second output element.

The motor may be formed by an electric motor. The motor may be formed by a synchronous or an asynchronous machine. The motor may comprise a rotor and a stator. The motor may comprise a driving shaft. The driving shaft may be connected torque proofly to or may be formed by the rotor. The input element of the first planetary gear set may be torque proofly connected to or formed by the driving shaft of the motor.

In a third aspect, a vehicle comprises a drive apparatus according to the second aspect and at least two traction elements. Further features, effects and advantages for the third aspect can be inferred from the features, effects and advantages of the preceding aspects. Features, effects and advantages of the third aspect also provide features, effects and advantages for the preceding aspects. Each of the first output element and the second output element is configured for outputting a driving force to one of the traction elements for moving the vehicle. The vehicle may be formed by at least one of a passenger car, a truck or a working machine, e.g. a tractor, wheel loader or a dumper. The traction element may comprise a driving wheel or a continuous track propulsion. Each of the traction elements may be mechanically linked, e.g. at least via one of a transmission, a cardan shaft and a hinge, to one of the driving elements. By the cardan shafts and the hinges between the traction elements and the output elements, a steering angle or a range of spring may be provided.

### Brief description of the drawings

Figure 1 shows a top view of a schematic diagram of an embodiment of a vehicle comprising a drive apparatus.
Figure 2 schematically shows a general layout of the transmission of the vehicle of Figure 1.
Figure 3 shows a sectional view of an embodiment of the transmission of Figure 2.

### Detailed description of embodiments

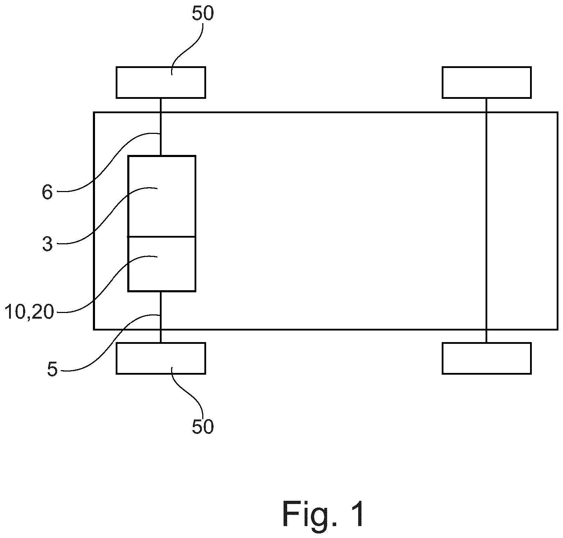

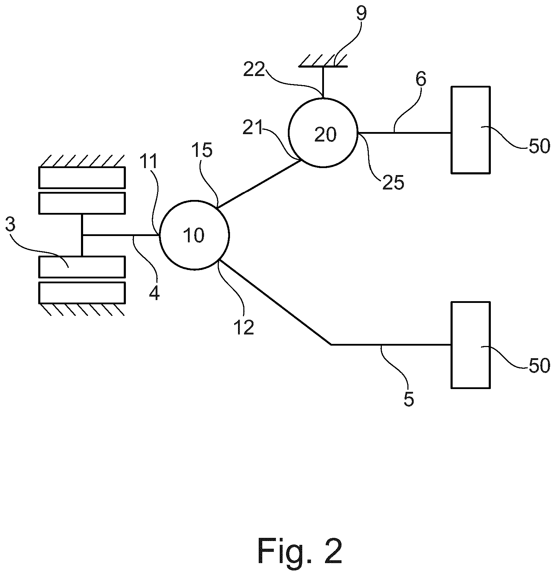

Figure 1 shows a top view of a schematic diagram of an embodiment of a vehicle comprising a drive apparatus and two traction elements 50 being formed by driving wheels. The drive apparatus comprises a motor 3 and a transmission comprising a first output element 5, a second output element 6, a planetary gear device with a first planetary gear set 10 and a second planetary gear set 20 as described with reference to figure 2. The motor 3 is formed as an electric motor comprising a rotor and a stator. The rotor forms a driving shaft for providing a driving power to the input element of the transmission, which is not shown in figure 1. Each of the first output element 5 and the second output element 6 is configured for outputting a driving power to one of the traction elements 50 for moving the vehicle.

Figure 2 schematically shows a general layout of the transmission of the vehicle of Figure 1. The transmission comprises the planetary gear device with the first planetary gear set 10 having a first sun gear 11, a first carrier 12 and a first ring gear 15. The transmission comprises the second planetary gear set 20 having a second sun gear 21, a second carrier 22 and a second ring gear 25. A driving power, e.g. a torque, of the motor 3 can be introduced into the transmission via the first sun gear 11 of the first planetary gear set 10. For this purpose, an input element 4 driven by the motor 3 is mechanically linked to the first sun gear 11 of the first planetary gear set 10, here torque proofly connected. The first ring gear 15 of the first planetary gear set 10 is torque proofly connected to the first sun gear 21 of the second planetary gear set 20, here by being integrally formed. The second carrier 22 of the second planetary gear set 20 is connected torque proofly to the stationary element 9, here a transmission housing. The first output element 5 is mechanically linked to the first carrier 12 of the first planetary gear set 10, in this case torque proofly connected. The first output element 5 is mechanically linked to one of the traction elements 50. The second output element 6 is mechanically linked to the second ring gear 25 of the second planetary gear set 20, in this case torque proofly connected. The second output element 6 is mechanically linked to another of the two traction elements 50.

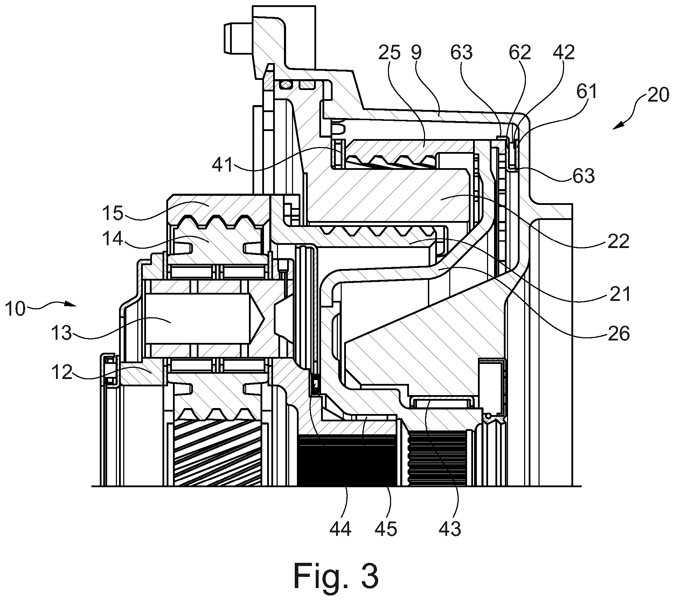

Figure 3 shows a sectional view of an embodiment of the transmission of figure 2. The transmission comprises the planetary gear device with the first planetary gear set 10, the second planetary gear set 20, the input element, the first output element 5 and the second output element 6. The input element, the first output element 5 and the second output element 6 are not shown in figure 3. The transmission is configured for dividing a driving power from the input element to the first output element 5 and the second output element 6.

The first planetary gear set 10 comprises the first sun gear 11. The first sun gear 11 is not visible in figure 3. The first planetary gear set 10 comprises the first carrier 12, a number of first planetary studs 13 and a number of first planetary gears 14. The first planetary gear set 10 comprises the first ring gear 15. The first sun gear 11 is in meshing engagement with one of the first planetary gears 14. One of the first planetary gears 14 is in meshing engagement with the first ring gear 15 and is rotatably supported by one of the first planetary studs 13. The first planetary studs 13 are attached to the first carrier 12.

The second planetary gear set 20 comprises the second sun gear 21, the second carrier 22, a number of second planetary studs and a number of second planetary gears not visible in figure 3. The second planetary gear set 20 comprises the second ring gear 25. The second sun gear 21 is in meshing engagement with one of the second planetary gears. One of the second planetary gears is in meshing engagement with the second ring gear 25 and is rotatably supported by one of the second planetary studs. The second planetary studs are attached to the second carrier 22. The second carrier 22 is connected torque proofly to the stationary element 9 at a radially outer side of the second planetary gear set 20.

The first planetary gear set 10 and the second planetary gear set 20 are arranged displaced with respect to each other in the axial direction. The second planetary gear set 20 is arranged further outside than the first planetary gear set 10 in the radial direction. The second sun gear 21 is arranged within the first ring gear 15 in the radial direction. The input element, the first output element 5 and the second output element 6 are arranged coaxially. The first output element 5 and the second output element 6 extend into opposite directions in the axial direction.

The second ring gear 25 is supported by a first bearing unit 41 being configured for receiving an axial force in a first direction and by a second bearing unit 42 being configured for receiving an axial force in a second direction opposite to the first direction. Thereby, the second ring gear 25 is positioned in the axial direction. The first bearing unit 41 and the second bearing unit 42 are arranged on opposing sides of the second ring gear 25 and at the radial height of the second ring gear 25. The first bearing unit 41 comprises an axial needle bearing and is supported by the second carrier 22, which extends radially outward along the second ring gear 25 to the stationary element 9. The second carrier 22 is supported by the stationary element 9 via a snap ring in the axial direction. The second bearing unit 42 axially supports the second ring gear 25 with respect to the stationary element 9. The second bearing unit 42 comprises an axial needle bearing, a housing locating washer 61 and a shaft locating washer 62. The shaft locating washer comprises a first annularly formed protrusion 63 for being attached to an outer circumference of the second ring gear 25. The shaft locating washer 62 comprises a second annularly formed protrusion 63 for supporting the needles of the axial needle bearing in the radial direction. Thereby, the shaft locating washer 62 comprises a Z-shaped profile in the circumferential direction. Both of the first bearing unit 41 and the second bearing unit 42 extend radially outward of the tooting of the second ring gear 25, which meshes with the toothing of one of the second planetary gears. In addition, both of the first bearing unit 41 and the second bearing unit 42 overlap with the toothing of the second ring gear 25 in the radial direction.

The second output element 6 is connected torque proofly to a ring gear carrier 26. The ring gear carrier 26 is connected torque proofly to the second ring gear 25. It extends from the second ring gear 25 radially inward to be connected to the second output element 6. Thereby, the second ring gear 25 is connected torque proofly to the second output element 6. The second output element 6 is positioned with respect to the second ring gear 25 in the axial direction by the torque proof connections. Thereby, the ring gear carrier 26 and the second output element 6 are positioned in the axial direction via the second ring gear 25 by the first bearing unit 41 and the second bearing unit 42.

Further, the second output element 6 is supported in the radial direction by a third bearing unit 43. The third bearing unit 43 comprises a radial needle bearing. Via the torque proof connection between the second ring gear 25 and the second output element 6, the second ring gear 25 is supported in the radial direction by the third bearing unit 43.

The ring gear carrier 26 and the second output element 6 are positioned in the axial direction by a fourth bearing unit 44 being formed as an axial needle roller bearing with respect to the first carrier 12. The ring gear carrier 26 and the second output element 6 are positioned in the radial direction by a fifth bearing unit 45 being formed as a radial needle roller bearing with respect to the first carrier 12.

### Reference signs

- 3: motor
- 5: first output element
- 6: second output element
- 9: stationary element
- 10: first planetary gear set
- 11: first sun gear
- 12: first carrier
- 13: first planetary stud
- 14: first planetary gear
- 15: first ring gear
- 20: second planetary gear set
- 21: second sun gear
- 22: second carrier
- 25: second ring gear
- 26: ring gear carrier
- 41: first bearing unit
- 42: second bearing unit
- 43: third bearing unit
- 44: fourth bearing unit
- 45: fifth bearing unit
- 50: traction element
- 61: housing locating washer
- 62: shaft locating washer
- 63: protrusion

## Claims

1. A transmission comprising an input element, a first output element (5), a second output element (6) and a planetary gear device (10, 20) comprising multiple gear set elements, wherein the input element is connected torque proofly to a first gear set element of the planetary gear device (10, 20), a second gear set element of the planetary gear device (10, 20) is connected torque proofly to the first output element (5), a third gear set element of the planetary gear device (10, 20) is connected torque proofly to the second output element (6), the third gear set element is supported by a first bearing unit (41) being configured for receiving an axial force in a first direction and a second bearing unit (42) being configured for receiving an axial force in a second direction opposite to the first direction, and at least one of the first bearing unit (41) and the second bearing unit (42) extends radially outward of a tooting of the third gear set element, the toothing of the third gear set element meshing with the toothing of a further ger set element.

2. The transmission according to claim 1, **characterized in that** the first bearing unit (41) and the second bearing unit (42) extend radially outward of the tooting of the third gear set element.

3. The transmission according to one of claims 1 and 2, **characterized in that** the third gear set element is connected torque proofly to the second output element (6) by a gear set element carrier (26).

4. The transmission according to one of claims 1 to 3, **characterized in that** the transmission comprises a stationary element (9) and the planetary gear device (10, 20) comprises a first planetary gear set (10) and a second planetary gear set (20), each of the planetary gear sets comprising a first gear set element, a second gear set element, and a third gear set element, wherein the first gear set element of the first planetary gear set (10) forms the first gear set element of the planetary gear device (10, 20), the second gear set element of the first planetary gear set (10) forms the second gear set element of the planetary gear device (10, 20), the third gear set element of the first planetary gear set (10) is connected torque proofly to the first gear set element of the second planetary gear set (20), the second gear set element of the second planetary gear set (20) is connected torque proofly to the stationary element (9), and the third gear set element of the second planetary gear set (20) forms the third gear set element of the planetary gear device (10, 20).

5. The transmission according to one of claims 1 to 4, **characterized in that** at least the bearing unit (41, 42) that extends radially outward of the toothing of the third gear set element of the planetary gear device (10, 20) comprises an axial roller bearing.

6. The transmission according to one of claims 1 to 5, **characterized in that** one of the first bearing unit (41) and the second bearing unit (42) comprises a protrusion (63) for positioning the respective bearing unit (41, 42) in a radial direction with reference to the third gear set element of the planetary gear device (10, 20).

7. The transmission according to one of claims 1 to 6, **characterized in that** the second output element (6) is supported by a third bearing unit (43) configured for receiving a radial force.

8. The transmission according to claim 7, **characterized in that** the third bearing unit (43) is arranged in the radial direction within the first bearing unit (41) and the second bearing unit (42).

9. The transmission according to one of claims 1 to 8, **characterized in that** a connection portion of the second output element (6) for a torque proof connection to a traction element shaft for driving a traction element is arranged in the axial direction in the same plane as a toothing of the planetary gear device (10, 20).

10. The transmission according to one of claims 4 to 9, **characterized in that** the first planetary gear set (10) and the second planetary gear set (20) are displaced in the axial direction with respect to each other.

11. The transmission according to one of claims 4 to 9, **characterized in that** a first sun gear forms the first gear set element of the first planetary gear set (10), a first carrier (12) forms the second gear set element of the first planetary gear set (10), a first ring gear (15) forms the third gear set element of the first planetary gear set (10), a second sun gear (21) forms the first gear set element of the second planetary gear set (20), a second carrier (22) forms the second gear set element of the second planetary gear set (20), and a second ring gear (25) forms the third gear set element of the second planetary gear set (20).

12. A drive apparatus comprising a motor (3) and a transmission according to one of claims 1 to 11, wherein the motor (3) is configured for providing a driving power to the input element of the transmission, and the transmission is configured for dividing the driving power from the input element to the first output element (5) and the second output element (6).

13. A vehicle comprising a drive apparatus according to claim 12 and at least two traction elements (50), wherein each of the first output element (5) and the second output element (6) is configured for outputting a driving force to one of the traction elements (50) for moving the vehicle.

## Amended claims

### Amended claims in accordance with Rule 137(2) EPC.

1. A transmission comprising an input element (4) having an rotation axis corresponding to an axial direction, a first output element (5), a second output element (6) and a planetary gear device (10, 20) comprising multiple gear set elements, wherein the input element (4) is connected torque proofly to a first gear set element (11) of the planetary gear device (10, 20), a second gear set element (12) of the planetary gear device (10, 20) is connected torque proofly to the first output element (5), a third gear set element (25) of the planetary gear device (10, 20) is connected torque proofly to the second output element (6), **characterized in that**
the third gear set element (25) is supported by a first bearing unit (41) being configured for receiving an axial force in a first direction and a second bearing unit (42) being configured for receiving an axial force in a second direction opposite to the first direction, and at least one of the first bearing unit (41) and the second bearing unit (42) extends radially outward of a tooting of the third gear set element (25), the toothing of the third gear set element (25) meshing with the toothing of a further ger set element.

2. The transmission according to claim 1, **characterized in that** the first bearing unit (41) and the second bearing unit (42) extend radially outward of the tooting of the third gear set element (25).

3. The transmission according to one of claims 1 and 2, **characterized in that** the third gear set element (25) is connected torque proofly to the second output element (6) by a gear set element carrier (26).

4. The transmission according to one of claims 1 to 3, **characterized in that** the transmission comprises a stationary element (9) and the planetary gear device (10, 20) comprises a first planetary gear set (10) and a second planetary gear set (20), each of the planetary gear sets (10, 20) comprising a first gear set element (11, 21), a second gear set element (12, 22), and a third gear set element (15, 25), wherein the first gear set element (11) of the first planetary gear set (10) forms the first gear set element (11) of the planetary gear device (10, 20), the second gear set element (12) of the first planetary gear set (10) forms the second gear set element (12) of the planetary gear device (10, 20), the third gear set element (15) of the first planetary gear set (10) is connected torque proofly to the first gear set element (21) of the second planetary gear set (20), the second gear set element (22) of the second planetary gear set (20) is connected torque proofly to the stationary element (9), and the third gear set element (25) of the second planetary gear set (20) forms the third gear set element (25) of the planetary gear device (10, 20).

5. The transmission according to one of claims 2 to 4, **characterized in that** at least the bearing unit (41, 42) that extends radially outward of the toothing of the third gear set element (25) of the planetary gear device (10, 20) comprises an axial roller bearing.

6. The transmission according to one of claims 1 to 5, **characterized in that** one of the first bearing unit (41) and the second bearing unit (42) comprises a protrusion (63) for positioning the respective bearing unit (41, 42) in a radial direction with reference to the third gear set element (25) of the planetary gear device (10, 20).

7. The transmission according to one of claims 1 to 6, **characterized in that** the second output element (6) is supported by a third bearing unit (43) configured for receiving a radial force.

8. The transmission according to claim 7, **characterized in that** the third bearing unit (43) is arranged in the radial direction within the first bearing unit (41) and the second bearing unit (42).

9. The transmission according to one of claims 1 to 8, **characterized in that** a connection portion of the second output element (6) for a torque proof connection to a traction element shaft for driving a traction element is arranged in the axial direction in the same plane as a toothing of the planetary gear device (10, 20).

10. The transmission according to one of claims 4 to 9, **characterized in that** the first planetary gear set (10) and the second planetary gear set (20) are displaced in the axial direction with respect to each other.

11. The transmission according to one of claims 4 to 9, **characterized in that** a first sun gear (11) forms the first gear set element (11) of the first planetary gear set (10), a first carrier (12) forms the second gear set element (12) of the first planetary gear set (10), a first ring gear (15) forms the third gear set element (15) of the first planetary gear set (10), a second sun gear (21) forms the first gear set element (21) of the second planetary gear set (20), a second carrier (22) forms the second gear set element (22) of the second planetary gear set (20), and a second ring gear (25) forms the third gear set element (25) of the second planetary gear set (20).

12. A drive apparatus comprising a motor (3) and a transmission according to one of claims 1 to 11, wherein the motor (3) is configured for providing a driving power to the input element (4) of the transmission, and the transmission is configured for dividing the driving power from the input element (4) to the first output element (5) and the second output element (6).

13. A vehicle comprising a drive apparatus according to claim 12 and at least two traction elements (50), wherein each of the first output element (5) and the second output element (6) is configured for outputting a driving force to one of the traction elements (50) for moving the vehicle.
